# EUROPEAN PATENT APPLICATION

(11) **EP 1 505 478 A1**
(43) Date of publication of application: **09.02.2005**
(21) Application number: 03077525.8
(22) Date of filing: 08.08.2003
(51) Int. Cl.: G06F 1/16, H04M 1/02

(54) **Navigation unit in hinge**

(71) Applicant: Sony Ericsson Mobile Communications AB, 221 88 Lund (SE)
(72) Inventor: Schack, Göran, 296 33 Ahus (SE)
(74) Representative: Dahnér, Christer

(57) **Abstract**

The present invention is directed towards a portable electronic device (100) that is provided with at least one first user input unit (108, 208, 308) positioned in a hinging section (106, 116) so that the size of the portable electronic device (100) can be reduced.

## Description

### TECHNICAL FIELD OF THE INVENTION

The present invention relates to controlling the operation of a portable electronic device. More particularly it relates to a device that is partly controlled via the operation of a navigation-like key.

### DESCRIPTION OF RELATED ART

Mobile phones containing menu systems and/or games are usually equipped with tools with which selections are made. These tools are generally so called navigation keys of the type joy-stick, turn-wheel or similar.

Mobile phones of clam-shell types, comprising an upper and a lower half or part joined together by a hinge, are associated with a problem relating to the position of the placement of the navigation key or joy stick. Since the size of the joy stick is considerable, any position of the joy stick in either the lower or the upper part of the clam-shell phone will have a significant impact on the size of the phone, since the thickness depends on both the upper and the lower part.

Moreover, it is a disadvantage to position the joystick in the lower part, whenever the screen is located in the upper part, because this means that the distance between the navigation key and the screen becomes unnecessarily long, which is not in favour of a user's close interaction with the events on the screen, which is sometimes needed for instance if the user is playing games.

Positioning the navigation key in either the upper part or lower part, furthermore brings the disadvantage that the navigation key becomes inaccessible to a user in a folded state of the phone.

There is also space occupied by the navigation key, which space can be otherwise used for other keys or to make the device smaller.

There is thus a need for providing a portable electronic device of a relatively small size, in which at least some of the disadvantages can be circumvented.

### SUMMARY OF INVENTION

The invention is thus directed towards solving the problem of providing at least one user input unit in a portable electronic device so that the size of the portable electronic device can be reduced.

This is achieved by positioning at least one user input unit in a section of a portable electronic device, which section is different from the section generally provided for a key pad.

One object of the present invention is thus to provide a portable electronic device in which at least one user input unit is positioned so that the size of the device can be reduced.

According to one aspect of this invention, this object is achieved by a portable electronic device comprising:
- a first section,
- a hinging section, for joining a second section to one end of the first section,
said hinging section having at least one first user input unit, such that the first user input unit can be actuated for controlling at least some operations of the device.

This aspect of the present invention has the advantage that the user input unit is positioned in a hinging section and does not need to occupy space in another section of the portable electronic device. Said another section can therefore be made smaller in size, or be arranged with a different lay-out of key-pad etc.

A second aspect of the present invention is directed towards a portable electronic device including the features of the first aspect, further comprising a second section foldable around a first axis of rotation where said axis is provided at said end of the first section and substantially along one side of the first section.

A third aspect of the present invention is directed towards a portable electronic device including the features of second aspect, in which the at least one first user input unit is user accessible in at least a closed and an open position of said portable electronic device.

This third aspect brings the advantage that the same user input unit becomes available to a user in both a closed state and at least one open state of the portable electronic device, which reduces the number of user input units, needed or makes it possible to use the user input unit in a different mode of the phone.

A fourth aspect of the present invention is directed towards a portable electronic device including the features of second aspect, in which the second section is twistable around a second axis of rotation.

A fifth aspect of the present invention is directed towards a portable electronic device including the features of fourth aspect, in which the second axis of rotation is perpendicular to the first axis of rotation.

This aspect further has the advantage of presenting any information by the second section in both an open and a closed state. This gives the advantage that the first user input unit can be used with the second section also when the device is closed.

A sixth aspect of the present invention is directed towards a portable electronic device including the features of second aspect, in which the hinging section comprises a first part which projects out from said end of the first section and a second part which projects out from a corresponding end of the second section.

A seventh aspect of the present invention is directed towards a portable electronic device including the features of the second aspect, in which the second section is provided with at least one second user input unit.

An eighth aspect of the present invention is directed towards a portable electronic device including the features of the second aspect, in which at least one side of the second section is provided with a display.

This aspect of the present invention has the advantage that first user input units can be positioned close to the display, which favours any close interaction between the event(s) on the display and the user.

A ninth aspect of the present invention is directed towards a portable electronic device including the features of the first aspect, in which the first section is provided with a key pad functionality on one side of said first section.

A tenth aspect the present invention is directed towards a portable electronic device including the features of the ninth aspect, in which the at least one first user input unit is provided essentially on the same side of the portable electronic device, as the key pad functionality.

An eleventh aspect of the present invention is directed towards a portable electronic device including the features of the ninth aspect, in which the at least one first user input unit is provided on at least one side of the portable electronic device, said side being substantially perpendicular to the side of the key pad functionality.

A twelfth aspect of the present invention is directed towards a portable electronic device including the features of the ninth aspect, in which at least one second user input unit is provided essentially on the same side of the portable electronic device, as the key pad functionality.

A thirteenth aspect the present invention is directed towards a portable electronic device including the features of the first aspect, in which the first user input unit is of a first type.

A fourteenth aspect of the present invention is directed towards a portable electronic device including the features of the seventh aspect, in which the second user input unit is of a second type.

A fifteenth aspect of the present invention is directed towards a portable electronic device including the features of the thirteenth aspect, in which the first user input unit type is mechanically actuable.

A sixteenth aspect of the present invention is directed towards a portable electronic device including the features of the thirteenth aspect, in which the first user input unit type is a navigation key.

A seventeenth aspect of the present invention is directed towards a portable electronic device including the features of the thirteenth aspect, in which the first user input unit type is a joy-stick.

An eighteenth aspect of the present invention is directed towards a portable electronic device including the features of the thirteenth aspect, in which the first user input unit type is actuable by tactile interaction by a user of said portable electronic device.

A nineteenth aspect of the present invention is directed towards a portable electronic device including the features of the fourteenth aspect, in which the second user input unit type is a soft or no-name key.

A twentieth aspect of the present invention is directed towards a portable electronic device including the features of the first aspect, where said portable electronic device is a clam-shell type device.

A twenty-first aspect of the present invention is directed towards a portable electronic device including the features of the first aspect, where said portable electronic device is a phone.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a perspective view of a portable electronic device in an open state;
fig. 2 shows a perspective view of the portable electronic device in a closed state,
fig. 3 shows a perspective view of the portable electronic device in a closed state in which the upper section is twisted.

### DETAILED DESCRIPTION OF THE EMBODIMENTS

The present invention relates to provision of a navigation-like key for at least partly controlling the operation of a portable electronic device. In the following the portable electronic device will be described in relation to a mobile phone, however it should be realised that it can be any one of a variety of devices like a personal digital assistant (PDA), a portable phone, a game box of any kind etc.

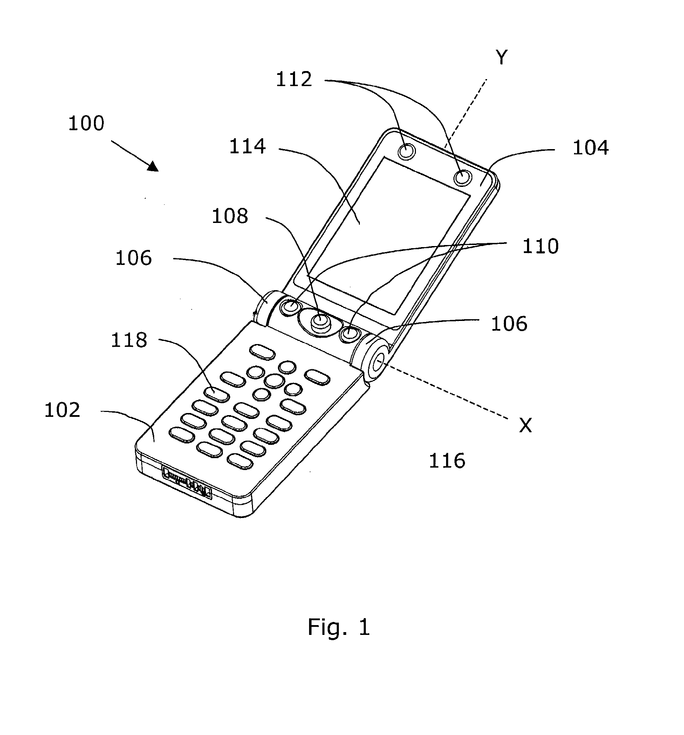

Reference will now be given to fig. 1 showing a clam-shell type of phone, 100, according to one preferred embodiment of the invention. In this figure the phone, 100, being in its open state, comprises a first or lower section, 102, a second or upper section, 104, which are connected to each other by a hinging section 106, 116. This hinging section contains one first part, 116, protruding from one end of the lower section, 102, and one corresponding second part, 106, protruding from the upper section, 104. These two protruding parts, 106, 116, are so designed to fit to each other and in this state to form a hinging section joining the lower section, 102, to the upper section, 104. Said hinging section further provides a rotational axis X around which the protruding parts 106, 116, are arranged. These protruding parts can thus be rotated around this rotational axis X.

In this embodiment the first protruding part, 116, of the hinging section is a continuation of the lower section, 102, and the corresponding second protruding part, 106, is a continuation of the upper section, 104. Although the hinging section shown in figure 1, is visualized as being cylindrically shaped, a variety of shapes of this section are just as beneficial. Moreover, the second protruding part, 106, visualized in this figure as divided in one left and one right end subpart, embracing the first protruding part, 116, can be shaped in a number of different ways, one of which is as one single left-hand (of right-hand) protruding part from one section connecting to one corresponding single right-hand (or left-hand) protruding part from the other section.

In figure 1 the hinging section, 106, 116, comprises a first type user input unit in the form of a navigation key, 108, arranged on substantially the same side of the clam-shell type of phone as the key pad functionality, 118, shown in figure 1. Adjacent to said navigation key, 108, and positioned centered around said navigation key, 108, are further provided two second type user input units in the form of two soft or no-name keys, 110, in said first part, 116, of the hinging section, 106, 116.

The phone as presented in figure 1 is further provided with a key pad, 118, at the lower section of said phone. The upper section of the phone is further provided with a display, 114, as visualised in the same figure. Adjacent to the display, 114, on the upper section of the device is provided two further second type user input units in the form of two soft or no-name keys, 112. In addition figure 1 shows a second rotational axis Y, which is discussed down below.

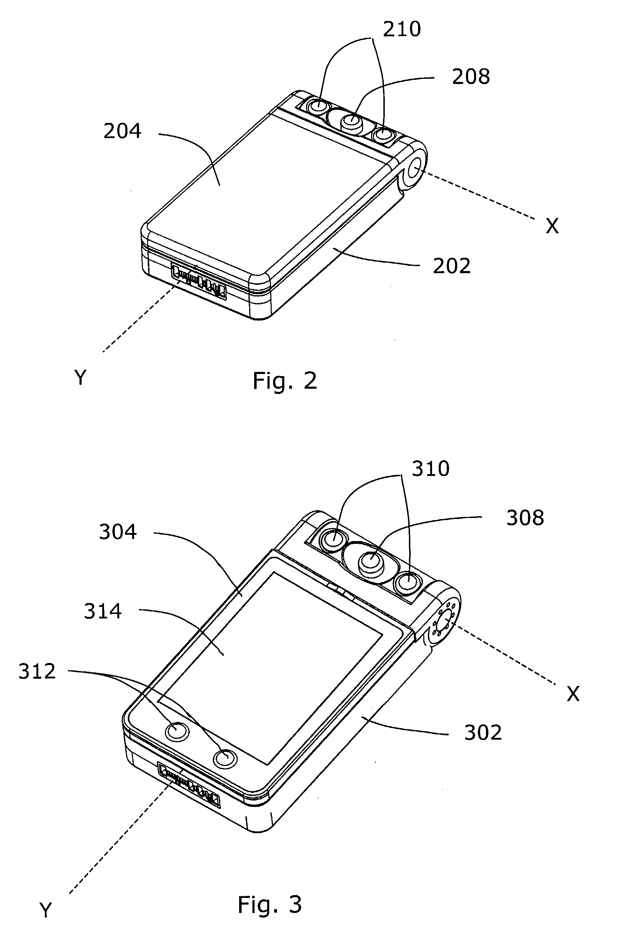

Figure 2 shows said portable electronic device in a closed state, in which the lower section, 202, and the upper section, 204, are folded together by a rotation around the rotational axis X. It is noted that the navigation key, 208 and the no-name or soft keys, 210 are accessible to the user, even in this closed state of the phone.

Figure 3 presents the portable clam-shell type phone, from figs 1 and 2, in a state in which the lower section 302, and the upper section, 304, are folded. This state is however different from the state presented in figure 2. In order to reach the state of figure 3 from the state of figure 2, the portable phone of figure 2 is 1) opened; 2) the upper section twisted 180° around the second rotational axis Y perpendicular to the rotational axis X of the hinging region, 106, 116 of figure 1; and 3) the lower section, 302, and the upper section, 304, are folded back together, by a rotation around the rotational axis X of the hinging section, to reach the closed state of figure 3, in which the phone presents the display, 314.

The rotation around the rotational axis Y is enabled through the second protruding part being joined to the rest of the second section via a rod providing rotation capability around the rotational axis Y.

This twisted folded state allows the user of this portable phone to use the same navigation unit as was used for the operation of the phone in state of figure 1.

The phone further demonstrates one of its advantages in this closed position, that is to make the navigation unit accessible to a user, and to provide this navigation unit close to a display, which is particularly beneficial for gaming, since this position of the phone favours any close interaction between the user and the events presented on the display without any hindering from the key pad on the lower section. This mode is also particularly advantageous for gaming, since it allows the usage of soft or no-name keys, 310, and, 312, together with the strategically positioned navigation unit, 308.

In this state of twisted upper section, the upper section can present information in a landscape mode. When this is done a user can use all the previously described user input units in a natural way when for instance playing games.

It is emphasized that this invention can be varied in many ways, of which the alternative embodiments below only are examples of a few. These different embodiments are hence non-limiting examples. The scope of this present invention, however, is only limited by the subsequently following claims.

According to another embodiment of the present invention, the navigation key, is positioned in a hinging section of a clam-shell type of phone and positioned on a side being substantially perpendicular to the rotational axis X of the portable phone. Such a positioning provides access to the navigation key in an open state and a closed state of the portable device. This positioning can also find usage in camera applications, in which the navigation key turns into a trigger for still pictures or film recording.

In the preferred embodiment of the present invention, the upper section is provided with a display on one side. In another embodiment of this invention the upper section is further provided with a second display on opposite side relative to the first display. In a closed state of the device, with the upper section being un-twisted relative to the lower section, this second display becomes available to the user. According to this embodiment this second display is for example a status display, presenting information related to the status of the phone, to the user.

According to yet another embodiment of the present invention, one navigation key is positioned in the hinging section on one side for instance parallel to one side of the lower section and one or more no-name or soft keys are positioned in the hinging section on a side directed substantially anti-parallel to said first side.

According to still yet another embodiment the shape of the hinging section joining the lower section with the upper section, has a shape selected from a group of shapes, comprising: a spherical shape, a cylindrical shape, a rectangular shape, the shape of an arbitrary polygon, etc.

The first user input unit is here described in the context of a navigation key. It should be realised that the key can be of a mechanically actuable type or any other type that is actuated by tactile interaction by a user of the device. Such actuable keys can for instance be joy sticks, 4- or 8-ways navigation keys, etc.

The user input units of the second type are typically soft or no-name key. These keys may however at least partly be provided for special tasks or functions.

There can moreover be provided more or fewer of the second type user input units than before described or even none, in the portable device. In its simplest form there is only one such unit which is be placed in either the second section or the hinging section.

With the present invention has thus been described a portable electronic device having the following advantages:
Positioning the navigation key in a hinging section means that space that else would have been used for the navigation key in another section, is set free. This space can be used to reduce the size of the portable electronic device or for instance to provide a more space consuming key pad in said section or used for some other device or unit.

Positioning the navigation key in the hinging section as described allows access to the navigation key from both a closed state and an open state of the portable electronic device. This further reduces the number of required navigation keys for the operation of the device in both a closed and an open state.

Since the size of a navigation key usually is considerable, any position of said key in either the lower or the upper section of a clam-shell type of phone will have significant impact of the size of the phone, since the thickness of the phone depends on the thickness of both the upper and the lower section. Positioning of the navigation key in the hinging section thus obviates the need of placing the navigation key in either of the lower and the upper section. A clam-shell stype of phone having a reduced thickness is thus obtained.

Moreover, positioning of a navigation key in the hinging section of a clam-shell type of phone, means that the distance between a display and the navigation key is reduced. This reduced distance has the advantage of favouring any close interaction between the events on the display and the user's operating said device.

A further advantage of a clam-shell type of phone having an upper section, twisted around a rotational axis Y, which orientation is perpendicular to the one of the rotational axis X of the hinging section, is that a navigation key in the hinging section is particularly well suited for gaming, using the display in a closed phone mode. Yet another advantage is that the close relative positioning of the soft or no-name keys in relation to the navigation key further invites the user for the purpose of gaming.

## Claims

1. Portable electronic device comprising
- a first section,
- a hinging section, for joining a second section to one end of the first section,
said hinging section having at least one first user input unit, such that the first user input unit can be actuated for controlling at least some operations of the device.

2. Portable electronic device, according to claim 1, further comprising a second section foldable around a first axis of rotation where said axis is provided at said end of the first section and substantially along one side of the first section.

3. Portable electronic device, according to claim 2, in which the at least one first user input unit is user accessible in at least a closed and an open position of said portable electronic device.

4. Portable electronic device, according to claim 2 or 3, in which the second section is twistable around a second axis of rotation.

5. Portable electronic device, according to claim 4, in which the second axis of rotation is perpendicular to the first axis of rotation.

6. Portable electronic device, according to any of claims 2-5, in which the hinging section comprises a first part which projects out from said end of the first section and a second section which projects out from a corresponding end of the second section.

7. Portable electronic device, according to any of claims 2-5, in which the second section is provided with at least one second user input unit.

8. Portable electronic device, according to claim 2-5, in which at least one side of the second section is provided with a display.

9. Portable electronic device, according to any of the previous claims, in which the first section is provided with a key pad on one side.

10. Portable electronic device, according to claim 9, in which the at least one first user input unit is provided essentially on the same side of the portable electronic device, as the key pad.

11. Portable electronic device, according to claim 9, in which the at least one first user input unit is provided on at least one side of the portable electronic device, said side being substantially perpendicular to the side of the key pad functionality.

12. Portable electronic device, according to claim 9, in which at least one second user input unit is provided essentially on the same side of the portable electronic device, as the key pad functionality.

13. Portable electronic device, according to any of the previous claims, in which the first user input unit is of a first type.

14. Portable electronic device, according to claim 7 or 12, in which the second user input unit is of a second type.

15. Portable electronic device, according to claim 13, in which the first user input unit type is mechanically actuable.

16. Portable electronic device, according to claim 13 or 15, in which the first user input unit type is a navigation key.

17. Portable electronic device, according to claims 15, in which the first user input unit type is a joy-stick.

18. Portable electronic device, according to claim 13, in which the first user input unit type is actuable by tactile interaction by a user of said portable electronic device.

19. Portable electronic device, according to claim 14, in which the second user input unit type is a soft or no-name key.

20. Portable electronic device, according to any of the previous claims, where said portable electronic device is a clam-shell type device.

21. Portable electronic device, according to any of the previous claims, where said portable electronic device is a phone.
